Europäisches Patentamt

European Patent Office

Office européen des brevets

(11) Veröffentlichungsnummer: **0 256 412**
**A2**

## (12) EUROPÄISCHE PATENTANMELDUNG

(21) Anmeldenummer: **87111211.6**

(22) Anmeldetag: **04.08.87**

(51) Int. Cl.⁴: **H02B 1/24**

(30) Priorität: **09.08.86 DE 3627143**

(43) Veröffentlichungstag der Anmeldung:
**24.02.88 Patentblatt 88/08**

(84) Benannte Vertragsstaaten:
**AT BE CH DE FR LI NL SE**

(71) Anmelder: **Sachsenwerk Aktiengesellschaft**
**Einhauser Strasse 9**
**D-8400 Regensburg(DE)**

(72) Erfinder: **Reichl, Erwin, Dipl.-Ing. (FH)**
**Spessartstrasse 4**
**D-8401 Tegernheim(DE)**

(54) **Elektrische Schaltanlage.**

(57) Im Hauptpatent wird eine elektrische Schaltanlage vorgeschlagen, bei der in jedem Zu-und Abgang anstelle von Last-oder Leistungsschaltern Mehrstellungstrennschalter (I, II) vorgesehen sind. Außerdem befindet sich in der Schaltanlage zwischen einer Haupt-und einer Hilfssammelschiene (10, 11) ein normalerweise geschlossener Kuppelschalter (8), der bei jeder Schalthandlung synchron mit dem Mehrstellungstrennschalter des betreffenden Zu-oder Abgangs die Ein-oder Ausschaltung nach einem auf beide Schaltgeräte wirkenden Schaltbefehl vornimmt.

Um die Aufeinanderfolge der Schalthandlungen unabhängig von der Streuung und Veränderung der Eigenzeiten der beiden Schaltgeräte zu machen, wirkt der Schaltbefehl auf den Antrieb des jeweiligen Mehrstellungstrennschalters (I oder II), während die Betätigung des Kuppelschalters (8) von der Antriebsbewegung des Mehrstellungstrennschalters (I oder II) abgeleitet wird.

Figur 1a

EP 0 256 412 A2

## Elektrische Schaltanlage

Die Erfindung betrifft eine elektrische Schaltanlage nach Hauptpatent (Patentanmeldung P 35 06 383.1).

Die nach dem Hauptpatent vorgeschlagenen Schaltanlagen bestehen aus je einer Haupt-und einer Hilfssammelschiene, die im stationären Betrieb durch einen Kuppelschalter verbunden sind, der zusammen mit je einem jedem Zu-oder Abgang zugeordneten Mehrstellungstrennschalter die Ein-oder Ausschaltung von Betriebs-und Störströmen durchführt. So wird bei einer Ausschaltung zunächst der Trennerarm des betreffenden Mehrstellungstrennschalters unterbrechungslos von der Haupf-auf die Hilfssammelschiene bewegt. In dieser Stellung öffnet der Kuppelschalter den Stromkreis, bevor der Trennerarm die Verbindung zur Hilfssammelschiene unterbricht. Nachdem der Mehrstellungstrennschalter die Trennstellung erreicht hat, wird der Kuppelschalter eingeschaltet und die Schaltanlage ist wieder schaltbereit. Das beschriebene Schaltverfahren soll dabei nach einem einzigen Schaltbefehl selbsttätig ablaufen, wobei der Antrieb des jeweiligen Mehrstellungstrennschalters mit dem des Kuppelschalters gekoppelt ist.

In der im Hauptpatent (Patentanmeldung P 35 06 383.1) als bekannt erwähnten Patentanmeldung K 11 405 K1.21c, Gr.27/03 sind für eine Ein-oder Ausschaltung insgesamt 5 Schalthandlungen notwendig. Dafür wird ein komplexer Steuerkreis mit zahlreichen Steuerkontakten, Sperrmagneten und einem besonderen Steuerrelais angegeben.

In der ebenfalls bekannten DAS 16 90 739 wird eine Schaltanlage mit einer Sammelschiene und - schnellschaltenden Trennschaltern für jeden Abzweig, sowie einem kurzunterbrechungsfähigen Leistungsschalter in der Einspeiseleitung vorgeschlagen, in dessen stromlosen Pausen die Trennschalter den jeweiligen Abzweig zu-oder abschalten.

Der Ausschaltbefehl für einen Trennschalter bewirkt dabei zunächst eine Stromunterbrechung durch den Leistungsschalter bei noch eingeschaltetem Trennschalter, während anschließend ein in der Ausschaltstellung des Leistungsschalters in dessen stromloser Pause betätigter Kontakt über einen weiteren Kontakt des für das Ausschalten des Trennschalters vorgesehenen Kommandoorgans den Speicherantrieb des Trennschalters auslöst.

Bei der bekannten Schaltanlage finden die Einschaltungen der einzelnen Abzweige durch die Trennschalter bei eingeschaltetem Leistungsschalter statt. Ein solches Schaltverfahren ist jedoch im allgemeinen nur bei kleinen Spannungen bzw. bei einem hochwertigen Isoliermittel wie SF6 zulässig, um lange Vorzündzeiten zu verhindern.

Den bekannten Schaltanlagen ist gemeinsam, daß jedes Schaltgerät einen eigenen Antrieb besitzt, die zum Ablauf der vorgesehenen Schaltfolgen elektrisch angesteuert werden. Der synchrone Ablauf der einzelnen Schaltvorgänge wird dabei durch die Streuungen der Schaltzeiten beeinflußt.

Die Erfindung sieht ihre Aufgabe darin, die im Hauptpatent vorgeschlagene Schaltanlage durch eine genauere Synchronisierung der zusammenwirkenden Schaltgeräte zu verbessern.

Erfindungsgemäß wird dies dadurch erreicht, daß der Schaltbefehl auf den Antrieb des jeweiligen Mehrstellungstrennschalters wirkt und die Betätigung des Kuppelschalters von der Antriebsbewegung des Mehrstellungstrennschalters abgeleitet wird.

Durch die dabei erzielte Abhängigkeit der Antriebsbe wegungen der beiden Schaltgeräte können sich die aus verschiedenen Gründen vorhandenen Streuungen oder die sich während der Betriebsdauer einstellenden Veränderungen der Eigenzeiten der einzelnen Schalter nicht mehr nachteilig auf die Schaltfunktionen auswirken. Dies ist besonders für den Kuppelschalter von Bedeutung, der bei Ausschaltungen einerseits nicht vor der galvanischen Trennung des Trennerarms von der Hauptsammelschiene öffnen und andererseits erst nach der galvanischen Trennung des Trennerarms von der Hilfssammelschiene die Verbindung zwischen den beiden Sammelschienen wieder herstellen darf.

Eine vorteilhafte Weiterbildung der Erfindungsidee sieht vor, daß die aus OS 34 12 637 bekannte Antriebseinrichtung mit nur einem Energiespeicher zum wahlweisen Schal ten mehrerer Mehrstellungstrennschalter so ergänzt wird, daß der Energiespeicher dabei auch den Kuppelschalter betätigt.

Weitere Einzelheiten der Erfindung werden im folgenden durch einige Figuren in schematischer Darstellung erläutert. So zeigen:

Figur 1a die erfindungsgemäße Schaltanlage mit einer gemeinsamen Antriebseinrichtung im eingeschalteten Zustand der Schalter.

Figur 1b die Schaltanlage nach Figur 1a, jedoch im ausgeschalteten Zustand des Schalters II.

Figur 2a die erfindungsgemäße Schaltanlage mit getrennten Antrieben für jeden Schalter und mechanischer Ankopplung des Kuppelschalters; dargestellt in der Trennstellung der Schalter.

Figur 2b die Schaltanlage nach Figur 2a im eingeschalteten Zustand des Schalters I.

Figur 3a die erfindungsgemäße Schaltanlage mit getrennten Antrieben für jeden Schalter und elektrische Ankopplung des Kuppelschalters, dargestellt in der Trennstellung der Schalter.

Figur 3b die Schaltanlage nach Figur 3a im eingeschalteten Zustand des Schalters I.

Figur 4a Ausschnitt der Antriebsanordnung nach Figur 2a mit Nutkurve für das Verbindungsgestänge dargestellt in der Trennstellung des Schalters I.

Figur 4b Die Antriebsanordnung nach Fig. 4a während des Einschaltvorgangs der Schalters I.

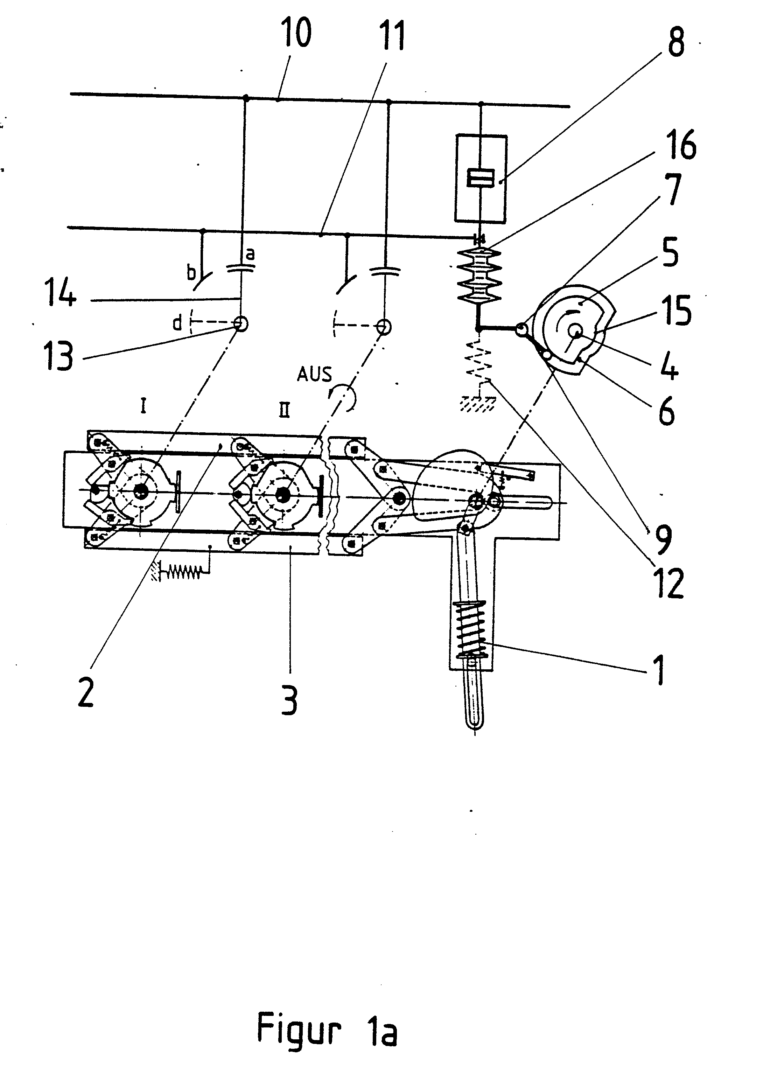

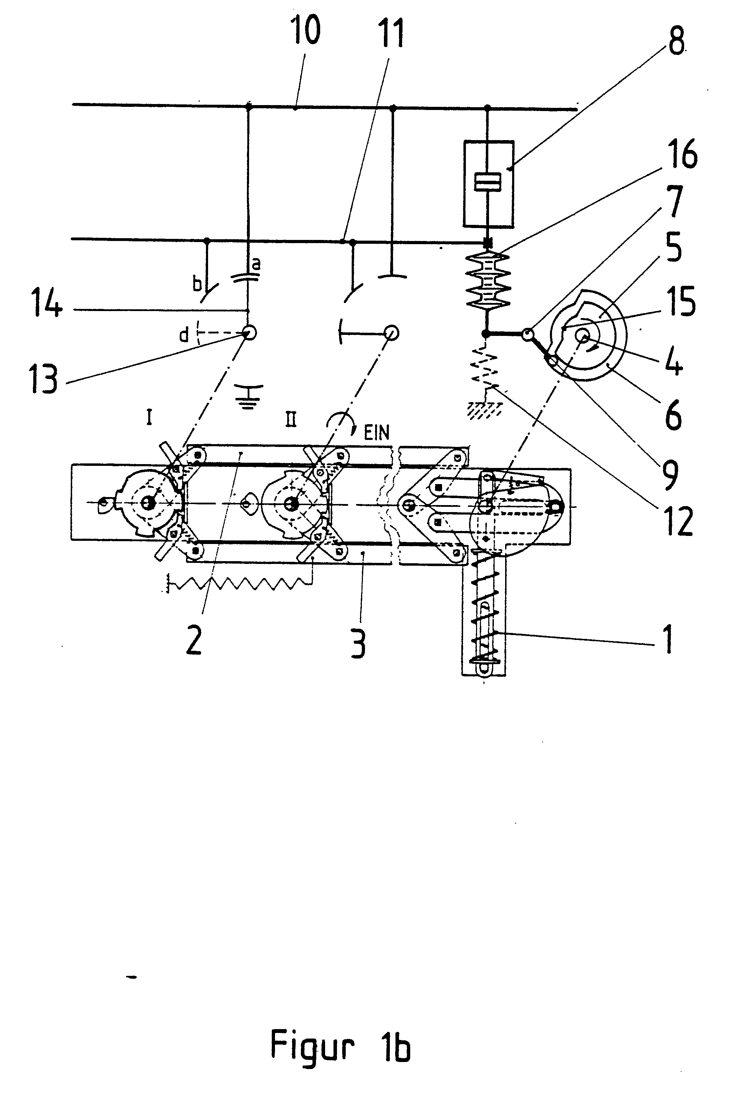

In den Figuren 1a und 1b ist die bekannte gemeinsame Antriebseinrichtung nach OS 34 12 637 mit dem Energiespeicher 1 und dem Doppelgestängesystem 2 und 3 zu erkennen, das den Energiespeicher 1 mit den Mehrstellungstrennschaltern I und II verbindet. Ein nicht dargestellter verschiebbarer Betätigungsblock kuppelt zur Durchführung von Schalthandlungen dabei den Energiespeicher 1 mit dem jeweiligen Mehrstellungstrennschalter I oder II. Die verlängerte Welle 4 des Energiespeichers 1 trägt eine Kurvenscheibe 5 mit einer geschlossenen Nutkurve 6, in der ein mit der Welle 7 des Kuppelschalters 8 verbundener Rollenhebel 9 so geführt ist, daß der Kuppelschalter 8 während einer Schalthandlung eines Mehrstellungstrennschalters I oder II synchron zu letzterem die Verbindung zwischen der Hauptsammelschiene 10 und der Hilfssammelschiene 11 öffnet und schließt. Anstelle der Nutkurve 6 kann auch eine nicht dargestellte Innenkurvenscheibe mit einer Anpreßfeder 12 die Führung des Rollenhebels 2 übernehmen.

In Figur 1a ist der Energiespeicher 1 in seiner gespannten Stellung dargestellt, während sich die beiden Mehrstellungs trennschalter I und II in EIN-Stellung befinden. Bei der Ausschaltung beispielsweise des rechten Mehrstellungstrennschalters II entspannt sich der Energiespeicher 1 und dreht die Welle 4 im Uhrzeigersinn um etwa 180 ° und gelangt so in die Position nach Figur 1b.

Die Welle 13 des Schalters II hat sich gleichzeitig um 90 ° im Gegenuhrzeigersinn gedreht und dabei die Trennerarme 14 aus der Stellung EIN in die Trennstellung unter Durchlaufen der Positionen a) bis d) gemäß Figur 1 des Hauptpatents (Patentanmeldung P 36 06 383.1) geführt. In der Zwischenstellung nach Position b) hat der Rollenhebel 9 die Vertiefung 15 der Nutkurve 6 erreicht und dabei den Kuppelschalter 8 geöffnet. In Figur 1b ist der Energiespeicher 1 entspannt und der Kuppelschalter 8 wieder geschlossen. Eine Drehung der Welle 4 um weitere 180 ° spannt den Energiespeicher wieder und führt ihn in die auf Figur 1a dargestellte Position zurück. Der Kuppelschalter 8 ist über einen beweglichen Isolator 16 mit dem Rollenhebel 9 verbunden.

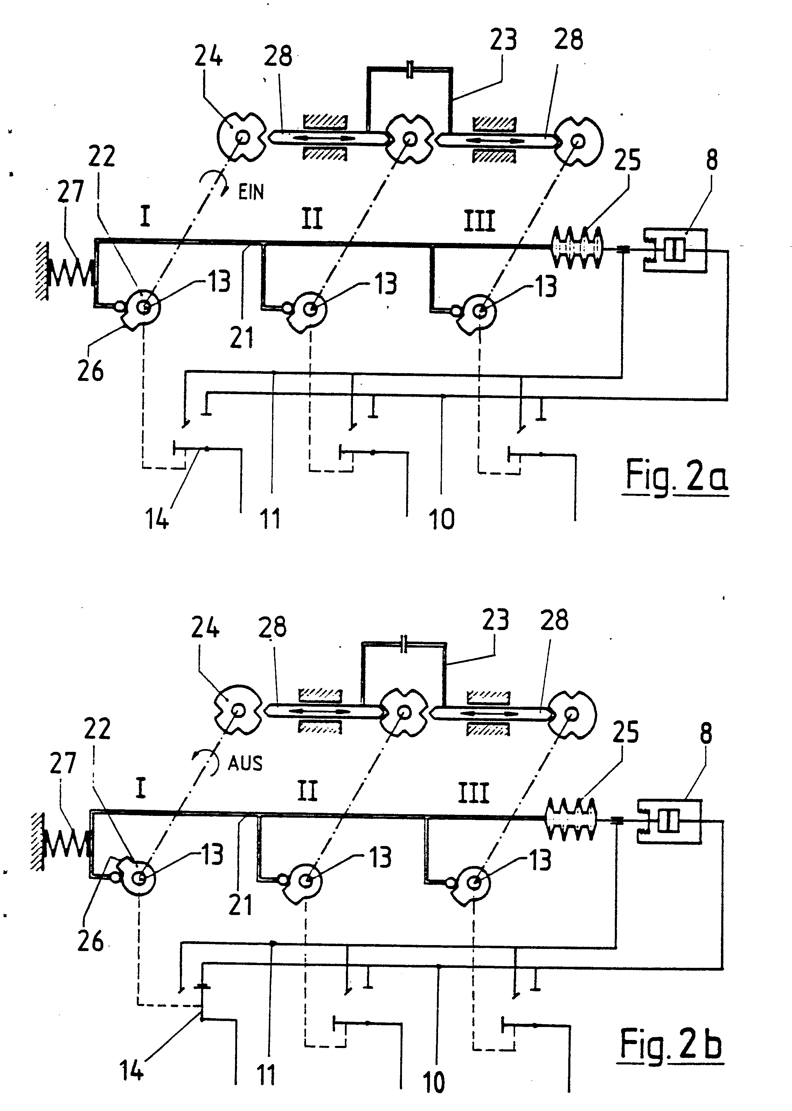

Für den Fall, daß jeder Mehrstellungstrennschalter I, II und III einen eigenen, unabhängigen Energiespeicher aufweist, ist in Figur 2a und 2b eine geeignete mechanische Kopplung mit dem Kuppelschalter 8 schematisch dargestellt, wobei in Figur 2a alle 3 Mehrstellungstrennschalter in Trennstellung stehen. Die Schalterwellen 13 tragen jeweils eine mit dem Verbindungsgestänge 21 zusammenarbeitende Kurvenscheibe 22 und eine Sperrscheibe 24 der Verriegelungseinrichtung. Das Verbindungsgestänge 21 wirkt über einen Isolator 25 auf den beweglichen Kontakt des Kuppelschalters 8. Beim Umschalten des linken Mehrstellungstrennschalters I von der Trennstellung nach Figur 2a in die Stellung EIN nach Figur 2b wird dessen Welle 13 durch den nicht dargestellten Energiespeicher dieses Schalters um 90 ° im Uhrzeigersinn gedreht, wobei sich die beweglichen Trennerarme 14 gemäß Figur 1 des Hauptpatents (Patentanmeldung P 35 06 383.1) aus der Pos. d in die Position a bewegen. Dabei bewirkt der auf der Kurvenscheibe 22 befindliche Nocken 26 gegen die Kraft der Feder 27 über das Gestänge 21 kurz vor der Berührung des beweglichen Trennerarms 14 mit dem festen Kontakt der Hilfssammelschiene 11 eine Öffnung des Kuppelschalters 8, während derselbe in der Position b wieder schließt und somit den Abzweig I einschaltet.

Bei der Ausschaltung eines Mehrstellungstrennschalters erfolgen die geschilderten Abläufe in umgekehrter Reihenfolge, ähnlich wie in der Beschreibung zu Figur 1a und 1b geschildert.

Die Verriegelungseinrichtung besteht aus Sperrgliedern 28, die durch die Sperrscheiben 24 verstellbar sind und über Mitnehmer 23 die Verstellbewegung in Sperrichtung zwischen benachbarten Sperrgliedern 28 übertragen, sie verhindert eine gleichzeitige Betätigung von mehr als einem Mehrstellungstrennschalter I, II oder III.

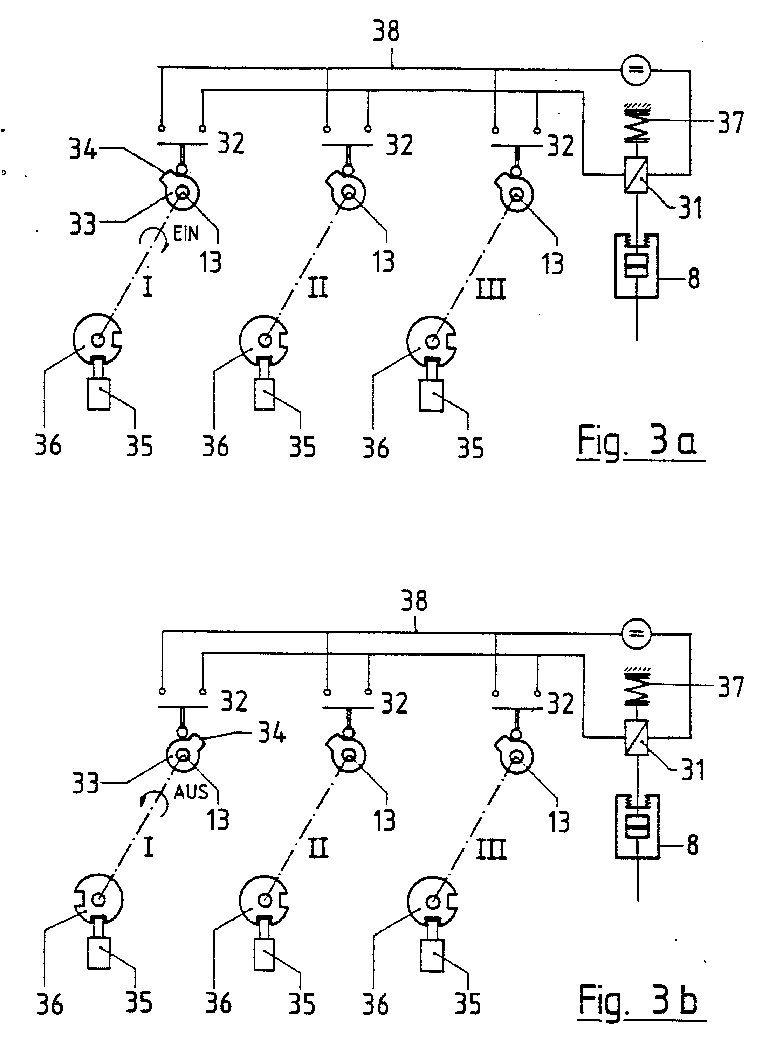

Für die Mehrstellungstrennschalter mit jeweils eigenen Energiespeichern läßt sich gemäß Figur 3a und 3 b auch eine elektrische Synchronisation mit dem Kuppelschalter 8 angeben. Dafür ist zur Betätigung des Kuppelschalters 8 ein Magnetantrieb 31 vorgesehen, in dessen Stromkreis 38 pro Mehrstellungstrennschalter je ein Steuerkontakt 32 geschaltet ist. Der Ablauf einer Ein-oder Ausschaltung verläuft im Prinzip wie weiter oben beschrieben mit dem Unterschied, daß hier die Kurvenscheibe 33 über den Nocken 34 durch Betätigung des Steuerkontaktes 32 den Stromkreis des Magnetantriebs 31 schließt, was die beabsichtigte AUS-Einschaltung des Kuppelschalters bewirkt.

Nach der anschließenden Öffnung des Steuerkontaktes 32 wird der Kuppelschalter 8 unter der Wirkung der Rückstellfeder 37 wieder geschlossen. Die Stellungen der Mehrstellungstrennschalter entsprechen den Figuren 2a und 2b, so daß sich in Figur 3a alle Schalter in Trennstellung befinden. In Figur 3b wird der linke Mehrstellungstrennschalter I in Stellung EIN gezeigt. Damit nicht gleichzeitig zwei oder mehrere Schalter betätigt werden können, ist eine mechanische Verriegelung wie in Bild 2a und 2b oder eine elektromagnetische Verriegelung mit Hilfe von Sperrmagneten 35, die mit geeignet ausgebildeten Sperrscheiben 36 zusammenwirken, vorgesehen.

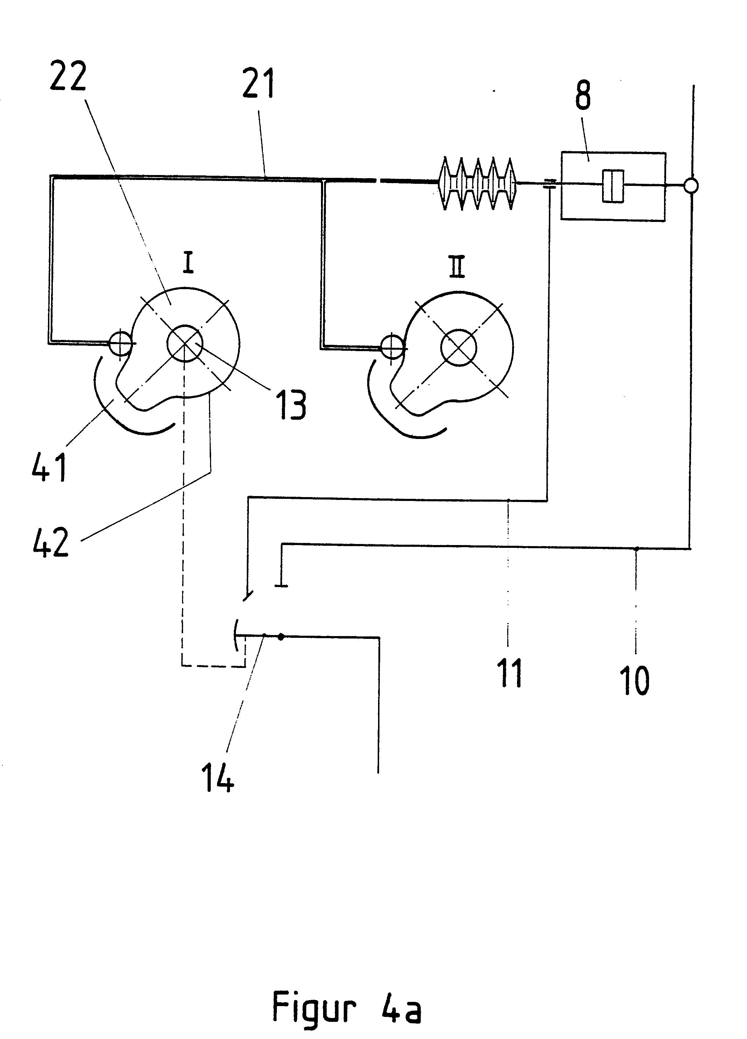

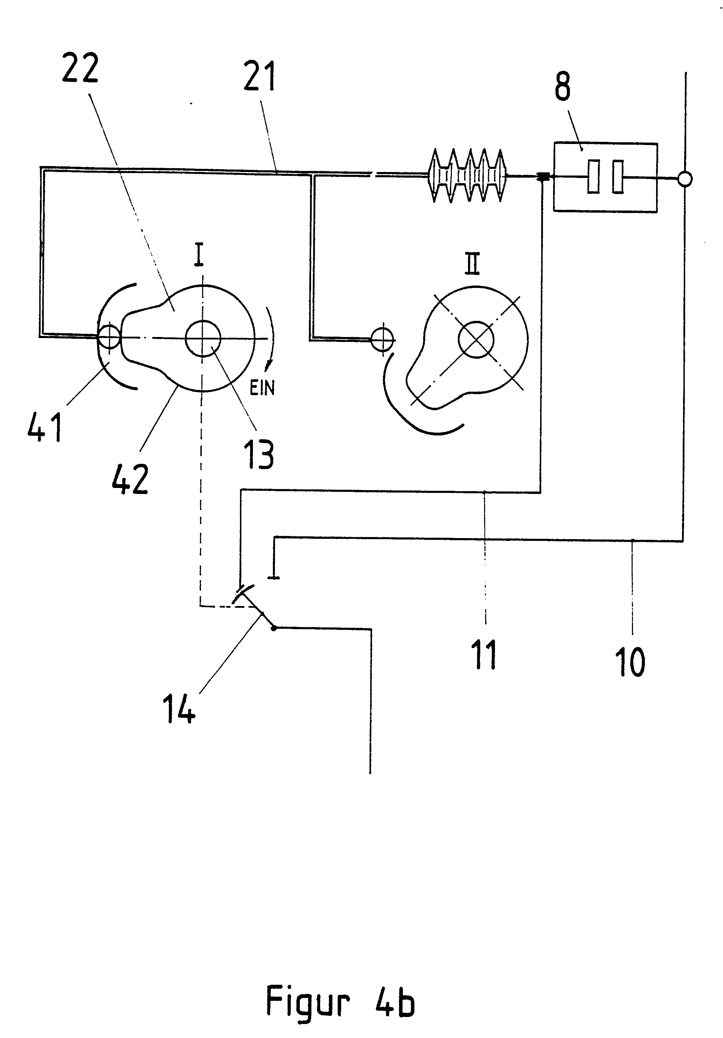

Die Figuren 4a und 4b stellen eine Weiterbildung der in den Figuren 2a und 2b angegebenen Lösung dar, bei der das Verbindungsgestänge 21 während des Schaltvorgangs des Kuppelschalters 8, also während des dafür wirksamen Teils der Drehung der Kurvenscheibe 22 in einer Nutkurve 41 geführt ist, die so ausgebildet ist, daß sowohl die Öffnung, als auch der Schließvorgang des Kuppelschalters 8 formschlüssig, ohne Zuhilfenahme einer Rückstellfeder erfolgt.

Die Nutkurve 41 ist beidseitig offen, an sie schließt sich die vorzugsweise kreisbogenförmige Innenkulisse 42 der Kurvenscheibe 22 an, an der das Verbindungsgestänge 21 anliegt, wenn keine Schalthandlung vorgenommen wird. (Fig. 4a). Andererseits kann bei Durchführung einer Schalthandlung mit dem Schalter I (Fig. 4b) das Verbindungsgestänge 21 ungehindert an der Nutkurve 41 des ein-oder ausgeschalteten Schalters II vorbeibewegt werden, um den Kuppelschalter 8 zu betätigen. Figur 4b zeigt dabei die Zwischenstellung des Mehrstellungstrennschalters I, in der der Kuppelschalter 8 gerade geöffnet hat und über die Hilfssammelschiene und den Trennerarm 14 in Stellung b mit dem zugehörigen Abgang verbunden ist. Der weitere Ablauf des Einschaltvorgangs von Schalter I ist bereits im Hauptpatent beschrieben worden.

Bezeichnungen

Energiespeicher ...................... 1
Doppelgestängesystem ............. 2, 3
Welle ............................... 4
Kurvenscheibe ........................ 5
Nutkurve ............................. 6
Welle (Kuppelschalter) ............ 7
Kuppelschalter ....................... 8
Rollenhebel ........................ 9
Hauptsammelschiene ................ 10
Hilfssammelschiene ................. 11
Anpreßfeder ............................ 12
Welle(Mehrstellungstrennschalter .... 13
Trennerarm ...................... 14
Vertiefung ..................... 15
Isolator ........................ 16
Verbindungsgestänge ..................... 21
Kurvenscheibe ....................... 22
Mitnehmer ........................... 23
Sperrscheibe ....................... 24
Isolator ........................ 25
Nocken ........................... 26
Feder ........................... 27
Sperrglied .................... 28
Magnetantrieb ..................... 31
Steuerkontakt ...................... 32
Kurvenscheibe ..................... 33
Nocken ........................... 34
Sperrmagnet ..................... 35
Sperrscheibe ..................... 36
Rückstellfeder ..................... 37
Stromkreis ...................... 38
Nutkurve ........................ 41
Innenkulisse ...................... 42

**Ansprüche**

1. Elektrische Schaltanlage, insbesondere Mittelspannungs-Schaltanlage mit zwei Sammelschienen, die mittels eines Kuppelschalters elektrisch miteinander zu verbinden sind, wobei mit dem Kuppelschalter die Last-bzw. Leistungsschaltungen für eine Vielzahl von Zu-und Abgängen durchführbar sind, die jeweils über einen als Mehrstellungstrennschalter ausgebildeten Trennschalter mit beiden Sammelschienen kuppelbar sind, mit folgenden Merkmalen:

a) Die Einspeiseleitungen und die Lastabgänge sind durch jeweils einen Mehrstellungstrennschalter (I, II oder III) mit den beiden Sammelschienen (10, 11) verbindbar, von denen die Haupt-(10) und die andere die Hilfssammelschiene (11) bildet,

b) die Mehrstellungstrennschalter (I, II oder III) stellen in einer ihrer Ein-Stellungen (a) eine galvanische Verbindung zwischen der jeweiligen Einspeiseleitung bzw. dem jeweiligen Lastabgang und der Hauptsammelschiene (10) her, und sind in einer weiteren Ein-Stellung (b) mit der Hilfssammelschiene (11) kuppelbar,

c) die Mehrstellungstrennschalter (I, II oder III) sind derart ausgebildet, daß bei Umschaltungen der Übergang von der Hauptsammelschiene (10) zur Hilfssammelschiene (11) mittels einer Schleifkontaktanordnung unterbrechungslos erfolgt,

d) die jeweiligen Einspeiseleitungen bzw. Lastabgänge stehend während des Betriebes mit der Hauptsammelschiene (10) über den Mehrstellungstrennschalter (I, II oder III) elektrisch in Verbindung, während diese bei Ein-und Ausschaltungen über den jeweiligen Mehrstellungstrennschalter in seiner anderen Ein-Stellung (b) solange mit der Hilfssammelschiene (11) elektrisch verbunden bleiben, bis der zwischen der Haupt-(10) und Hilfssammelschiene (11) angeordnete Kuppelschalter (8) für die nunmehr elektrisch dazu in Reihe liegende Einspeiseleitung oder Lastabgang die Ein-oder Ausschaltung durchgeführt hat,

e) die Ein-oder Ausschaltungen werden durch eine elektrische oder mechanische Zwangskopplung der Antriebe des Kuppelschalters (8) mit denen der Mehrstellungstrennschalter (I, II oder III) durchgeführt, und das Einschalten und das Ausschalten einer Leitung erfolgt durch nur einen auf die beiden beteiligten Schaltgeräte (8, I, II oder III) wirkenden Schaltbefehl nach Patent (Patentanmeldung P 35 06 383.1) **dadurch gekennzeichnet,** daß der Schaltbefehl auf den Antrieb des jeweiligen Mehrstellungstrennschalters (I, II oder III) wirkt und die Betätigung des Kuppelschalters (8) von der Antriebsbewegung des Mehrstellungstrennschalters (I, II oder III) abgeleitet wird.

2. Elektrische Schaltanlage nach Anspruch 1, **dadurch gekennzeichnet,** daß der Antrieb eines jeden Mehrstellungstrennschalters (I, II oder III) über eine elektrische oder mechanische Ankopplung der Kuppelschalter (8) mit betätigt.

3. Elektrische Schaltanlage nach Anspruch 1 oder 2, **dadurch gekennzeichnet,** daß auf den Antriebswellen (13) der Mehrstellungstrennschalter (I, II oder III) je eine Kurvenscheibe (22) befestigt ist, deren Formgebung den Kuppelschalter (8) über ein gemeinsames Verbindungsgestänge (21) und einem mit diesem verbundenen Isolierkörper (25) in Öffnungs- und Schließrichtung steuert.

4. Elektrische Schaltanlage nach Anspruch 3, **dadurch gekennzeichnet,** daß ein an der Kurvenscheibe (22) angebrachter Nocken (26) das Verbindungsgestänge (21) verschiebt oder verschwenkt und dabei den Kuppelschalter (8) öffnet und eine am Verbindungsgestänge (21) angreifende Feder (27) ihn schließt.

5. Elektrische Schaltanlage nach Anspruch 3, **dadurch gekennzeichnet,** daß eine an der Kurvenscheibe (22) angebrachte Nutkurve (41) das Verbindungsgestänge (21) verschiebt oder verschwenkt und dabei den Kuppelschalter (8) öffnet und schließt, während in den Endstellungen der Mehrstellungstrennschalter (I, 11 oder III) das Verbindungsgestänge (21) an der vorzugsweise kreisbogenförmigen Innenkulisse (42) der Kurvenscheibe (22) anliegt und für die Betätigung des Kuppelschalters (8) frei bewegbar ist.

6. Elektrische Schaltanlage nach Anspruch 2, **dadurch gekennzeichnet,** daß auf den Antriebswellen (13) der Mehrstellungstrennschalter (I, II oder III) je eine Kurvenscheibe (33) befestigt ist, deren Nocken (34) Steuerkontakte (32) eines zur Öffnung und Schließung des Kuppelschalters (8) zu betätigenden Stromkreises (38) zu-und abschalten.

7. Elektrische Schaltanlage nach Anspruch 6, **dadurch gekennzeichnet,** daß in dem Stromkreis (38) ein Magnetantrieb (31) zum Öffnen und eine Rückstellfeder (38) zum Schließen des Kuppelschalters (8) vorgesehen ist.

8. Elektrische Schaltanlage nach einem der Ansprüche 2 bis 7, **dadurch gekennzeichnet,** daß Verriegelungseinrichtungen die gleichzeitige Betätigung von 2 oder mehr Mehrstellungstrennschaltern verhindern.

9. Elektrische Schaltanlage nach Anspruch 8, **dadurch gekennzeichnet,** daß für Schaltanlagen mit mehr als zwei Mehrstellungstrennschaltern eine mechanische Verriegelung vorgesehen ist, die auf der Welle (13) eines jeden Mehrstellungstrennschalters (I, II und III) eine Sperrscheibe (24), und zwischen benachbarten Sperrscheiben (24) durch diese verstellbare Sperrglieder (28) enthält, wobei Mitnehmer (23) die Verstellbewegung von einem Sperrglied (28) auf ein benachbartes in Sperrichtung übertragen.

10. Elektrische Schaltanlage nach Anspruch 8, **dadurch gekennzeichnet,** daß eine elektromagnetische Verriegelung mit einer Sperrscheibe (36) und einem Sperrmagnet (35) für jeden Mehrstellungstrennschalter (I, II und III) vorgesehen ist.

11. Elektrische Schaltanlage nach Anspruch 1, **dadurch gekennzeichnet,** daß ein zur wahlweisen Betätigung für jeden Mehrstellungstrennschalter (I, II oder III) zur Verfügung stehender gemeinsamer Energiespeicher (1) den Kuppelschalter (8) öffnet und schließt.

12. Elektrische Schaltanlage nach Anspruch 1 oder 11, **dadurch gekennzeichnet,** daß auf der Welle (4) des Energiespeichers (1) eine Kurvenscheibe (5) befestigt ist, deren Formgebung den Kuppelschalter (8) über einen vorzugsweise doppelarmigen Rollenhebel (9) und einen Isolator (16) steuert.

13. Elektrische Schaltanlage nach Anspruch 11 und 12,

**dadurch gekennzeichnet,**

daß eine an der Kurvenscheibe (5) angebrachte geschlossene Nutkurve (6) den Rollenhebel (9) führt.

14. Elektrische Schaltanlage nach Anspruch 11 und 12,

**dadurch gekennzeichnet,**

daß eine Anpreßfeder (12) den Rollenhebel (9) auf der offenen Kulisse der Kurvenscheibe (5) führt, wobei ein Verschwenken des Rollenhebels (9) in eine Vertiefung (15) der Kulisse die Öffnung des Kuppelschalters (8) hervorruft.

Figur 1a

Figur 1b

Fig. 2a

Fig. 2b

0 256 412

38

34
33
EIN
13
I
36 35
II
13
32
III
13
32
37
31
8

Fig. 3a

38
33
34
AUS
13
I
36 35
II
13
32
III
13
32
37
31
8

Fig. 3b

Figur 4a

Figur 4b